# EUROPEAN PATENT SPECIFICATION

(11) **EP 2 818 042 B1**
(45) Date of publication and mention of the grant of the patent: **21.12.2016**
(21) Application number: 14174569.5
(22) Date of filing: 26.06.2014
(51) Int. Cl.: A01K 1/06, A01K 1/08

(54) **Yoke feed panel**
Selbstfanggitter
Cornadis

(30) Priority: 28.06.2013 GB 201311642
(43) Date of publication of application: 31.12.2014
(73) Proprietor: F. Klucznik & Son Limited, Adderley Green Stoke-on-Trent ST3 5BW (GB)
(72) Inventor: Allen, Robert Edward, Stoke-on-Trent, ST3 5BW (GB)
(74) Representative: Sales, Robert Reginald

(56) References cited:
- EP-A1- 0 664 950
- FR-A1- 2 752 669
- FR-A1- 2 864 748
- FR-A1- 2 882 222

## Description

This invention concerns yoke feed panels.

Yoke feed panels are widely used for instance when feeding cattle in a barn or shed. Yoke feed panels generally comprise a plurality of openings in a line through which openings for example cattle can extend their head and neck to access feed beyond the panel. The panels have a selectively operable automatic locking arrangement such that when a cow extends their head and neck through a respective opening the arrangement locks to retain the cow's neck extending through the opening.

This position permits a calmer feeding situation and reduces bullying and jostling between animals. The primary function/advantage of a yoke panel over a regular feed division panel with for instance plain vertical divisions, is that the locking arrangement of the yoke panel also permits inspection of a cow and any required treatment to be carried out with this happening to the cow in a familiar environment as opposed to being taken away to an unfamiliar environment which can produce stress in an animal, and hence decrease milk yield.

The locking arrangement generally comprises a first fixed elongate member which is usually vertical. A second pivotted elongate member spaced from the fixed elongate member is provided to define an opening therebetween. The pivotted elongate member is usually pivotally mounted about a horizontal generally central axis.

The pivotted elongate member is usually urged to a rest position inclined towards a lower end of the fixed elongate member, thereby defining an upwardly diverging opening through which a cow can place their head. A feeding cow will generally lower their head once extending through the opening to reach food in a trough or on the floor. In this lowering the cow's neck will engage against a lower part of the pivotted elongate member and urge it away from the inclined rest position. When the pivotted elongate member reaches a locking position, which may be a vertical alignment, the automatic locking arrangement if operable will engage to retain the pivoted elongate member in the locked position.

The locking arrangement is generally selectively automatically engageable, and can be moved between an automatic locking condition and a condition permitting free movement of the pivotted elongate member. An unlocking arrangement is generally provided to simultaneously unlock all of the locking arrangements in a panel.

A feature of yoke panels is that the pivotted elongate member can pivot past the vertical locking position away from the rest position, when the locking mechanism is not set, to a release position. This allows for greater freedom of movement when the pivoted elongate member is not locked, allowing greater comfort and reach for instance for feed for the animal. Additionally, a manually operable release, which is operated for instance by a farmer, is provided such that from the locked vertical position, the pivoted elongate member can be permitted to rotate to its maximum permissible opening in the release position, to allow the safer and easier release of a yoked (locked) animal in distress, whilst maintaining the remaining animals in the panel, in a locked state.

It is desirable for such panels to be robust and to operate reliably over a long time period without the requirement for any significant maintenance or repai r.

FR 2752669A1 discloses a yoke feed panel with a locking arrangement, which when in a locking condition, is automatically engageable.

According to the present invention there is provided a yoke feed panel, the panel comprising a plurality of yoke arrangements, with each yoke arrangement defining an opening through which an animal can extend their head and neck, each yoke arrangement comprising a frame defining an at least generally vertically aligned open space with an elongate restraining member pivotally mounted to the frame to extend across the space substantially from the top to the bottom thereof at a required inclination, a locking arrangement being provided which includes an engagement part provided on an upper end of the elongate restraining member and a locking part selectively movable between an unlocked condition and a locked condition, the engagement part being engageable with the locking part when the locking part is in the locked condition, the locking part including two latch arrangements which in the unlocked condition are located clear of the engagement part, and in a locked condition define two upwardly extending ramps facing each other substantially in the plane of the open space defined by the frame, with a gap between the summits of each ramp, in which gap the engagement part can selectively locate to retain the yoke arrangement in a locked position, the latch arrangements being movable substantially vertically between the locked and unlocked conditions, an elongate operating member being provided movable longitudinally relative to the feeding yoke panel to move the locking parts of each yoke arrangement between the locked and unlocked conditions, the latch arrangements being pivotally mounted to the yoke arrangement frame so as to be movable between a lowered position in the unlocked condition, and an upwardly extending inclined position in the locked condition, characterised in that projections on the operating member are engageable with tracks on the latch arrangements to move the latch arrangement between the lowered and inclined positions as the operating member moves.

The latch arrangements may be configured such that when in a locked condition with the engagement part moving from one side of the yoke arrangement to another, such as when moving from a release position, the engagement part will generally pass over the gap without entering thereinto, whilst when moving from an opposite side for instance from a rest position, the engagement part will drop into the gap. One of the latch arrangements may be higher than the other in the locked condition to provide for passing of the engagement part over the gap when moving from a release position.

A handle may be provided on the operating member, to facilitate movement thereof between the locked and unlocked conditions.

Operating members on adjacent colinear panels may be operatively interconnectable such that the movement of one operating member moves the locking parts on all of the adjacent panels.

The operating member may be slidably supported by support members on the latch arrangement.

Retaining means may be provided for selectively retaining the operating member in a required one of the locked and unlocked conditions. The retaining means may include one or more sprung pins selectively engagable in a respective hole or holes in the operating member.

A bracket arrangement may be provided on an upper part of the yoke arrangement, which bracket arrangement pivotally mounts the latch arrangements. The operating member may extend through the bracket arrangement, and slots may be provided in the operating member to receive pivotal mountings on the latch arrangements.

The tracks may be longer than the required amount of movement of the projections, to provide for discrepancies between respective yoke arrangements.

In one embodiment the latch arrangements each comprise a profiled member which is extendible through an opening in the operating member.

In a second embodiment each latch arrangement comprises a pair of profiled members, each locatable on a respective side of the operating member.

The engagement part may comprise a finger member slidably mountable in a track to extend between a pair of spaced brackets provided on the upper end of the elongate restraining member to be moved along the track. The track may be at least generally aligned with the elongate restraining member, with the finger member being urged by gravity to a lower end of the track except when urged upwardly by the latch arrangements.

A handle may be provided on the finger member to permit manual movement thereof along the track.

The finger member and/or latch arrangements may be made of a polymer material.

The invention also provides a yoke arrangement according to any of the preceding thirteen paragraphs, usable in a yoke feed panel.

Embodiments of the present invention will now be described by way of example only and with reference to the accompanying drawings, in which:-
Fig. 1 is a diagrammatic front view of a first yoke arrangement according to the invention, showing different respective positions thereof;
Fig. 2 is a diagrammatic perspective view of the yoke arrangement of Fig. 1;
Fig. 3 is a diagrammatic front view of the yoke arrangement of Fig. 1 in a release position;
Fig. 4 is a diagrammatic front view of the yoke arrangement of Fig. 1 showing a rest and a locked position;
Fig. 5 is a diagrammatic front view of part of the arrangement of Fig. 1 in an unlocked condition;
Fig. 6 is a similar view to Fig. 5 but in a locked condition;
Fig. 7 is a perspective view of the part of the arrangement of fig. 1 in a locked condition;
Fig. 8 is a similar view to fig. 7 but in an unlocked condition;
Figs. 9, 10 and 11 are respectively similar views to figs. 5 to 7 but of a second yoke arrangement according to the invention;
Fig. 12 is a perspective view of the second yoke arrangement in an unlocked condition;
Figs. 13 and 14 are respectively detailed diagrammatic perspective views of parts A and B in fig. 12;
Fig. 15 is a diagrammatic part sectional plan view of the second yoke arrangement; and
Fig. 16 is a diagrammatic perspective view of a yoke feed panel according to the invention.

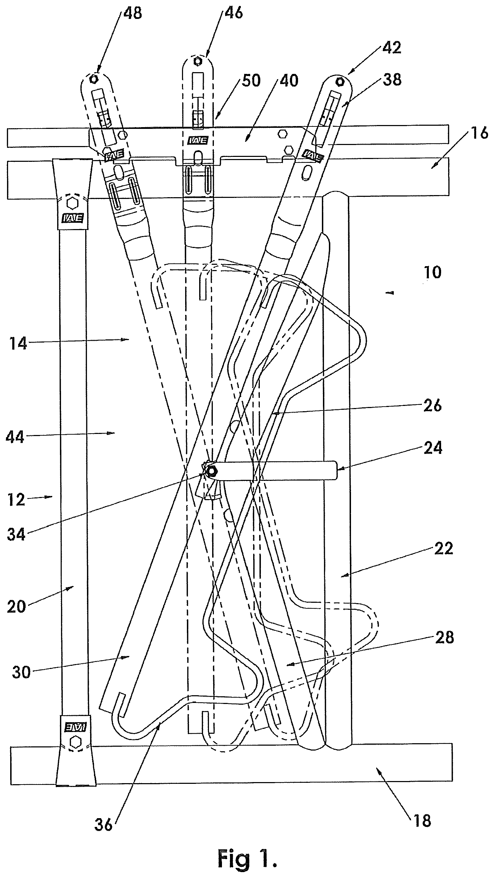

Figs. 1 to 4 show a yoke arrangement 10 which is part of a yoke feed panel which comprises a plurality of arrangements 10 interconnected in a line to permit a plurality of cows to simultaneously feed, and automatically be restrained if required.

The yoke arrangement 10 comprises a rectangular frame 12 defining a vertically aligned open rectangular space 14. The frame 12 has top and bottom bars 16, 18 and left and right side bars 20, 22 as shown in Fig. 1. All of the bars 16, 18, 20, 22 are formed of hollow circular tube, and the top and bottom bars 14, 16 are common to adjacent arrangements 10.

A mounting member 24 is provided extending into the space 14 defined by the frame 12 from the right side bar 22 at a mid height thereof, extending to just before the centre of the space 14.

Inclined support bars 26, 28 extend respectively from the right side bar 22 a short space below the top bar 16 to the mounting member 24 a short distance from its free end, and from the lower end of the right side bar 22 where it meets the bottom bar 18.

A restraining member 30 in the form of a length of hollow circular tube is provided. The restraining member 30 is mounted approximately half way along its length to the mounting member 24 adjacent the free end thereof. The mounting is provided by a bracket arrangement 32 provided towards the right hand side of the restraining member 30 as shown in Fig. 1. This means that the restraining member 30 is pivotally mounted towards the right hand side thereof as shown in Fig. 1, and therefore away from the head or neck of a cow using the arrangement 10. A pivot member 34 extends between spaced parts of the bracket arrangement 32 and through an opening in the mounting member 24.

A profiled wire 36 extends between the upper and lower ends of the restraining member to the right hand side thereof as shown in Fig. 1 to prevent a cow from placing their head to the right hand side of the restraining member 30 as shown in Fig. 1.

A first part 38 of an automatic locking arrangement 50 is provided on the upper end of the restraining member 30. The first part 38 of the locking arrangement 50 is selectively engageable with a second part 40 of the locking arrangement located above the top bar 16.

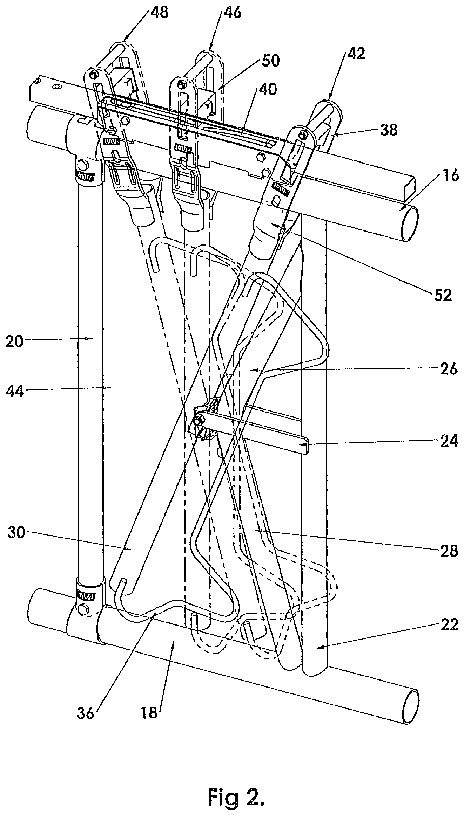

Figs. 1 and 2 show three potential operating conditions of the arrangement 10. In a rest condition as indicated by reference numeral 42 the restraining member 30 is inclined downwardly to the left as shown in Fig. 1 defining an upwardly diverging opening 44 through which a cow may pass the head to access feed. The cow will tend to move their head and neck downwardly urging the restraining member 30 to a vertical alignment, and if the locking arrangement 38, 40 is engaged, the restraining member 30 will automatically lock into a locked condition 46 with the restraining member 30 extending vertically. This restrains the cow in the yoke arrangement 10 and permits inspection or treatment of the cow.

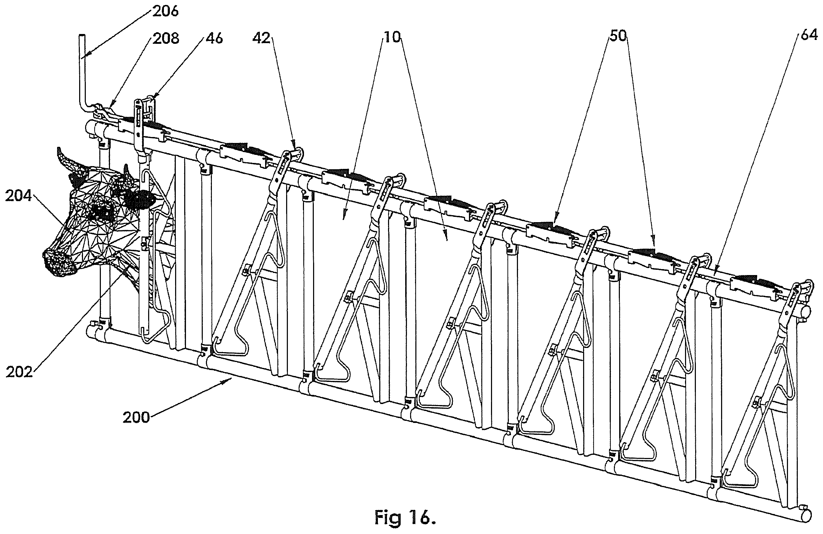

Fig. 16 shows a yoke feed panel 200 with seven yoke arrangements 10. The left hand most arrangement 10 as shown is in a locked condition 46 with a cow's neck 202 extending therethrough such that the cow's head 204 is restrained. The other yoke arrangements 10 are all in a rest condition 42, and the locking arrangements 50 are in a locked condition.

An operating handle is pivotally mounted to the left hand end of an operating member 64 which connects to each locking arrangement 50. The handle 206 is connected to the operating member 64 by a pivotal connection 208. The connection 208 includes a sprung pin (not shown) which is selectively engagable with a corresponding opening or openings (also not shown) in the operating member 64 to selectively restrain the operating member 64 and hence locking arrangements 50 in respectively either a locked or an unlocked condition.

It is to be realised that any required number of yoke arrangements 10 can be provided in a panel, and the panel 200 is shown as an illustrative example only. Adjacent colinear panels may be provided, and the operating members may be interconnected by for example fish plates such that the locking arrangements in all of the panels can be operated by a single operating handle.

When required the locking arrangement 50 can be moved from the locked condition, and this will generally take place simultaneously for all of the yoke arrangements 10 in a panel.

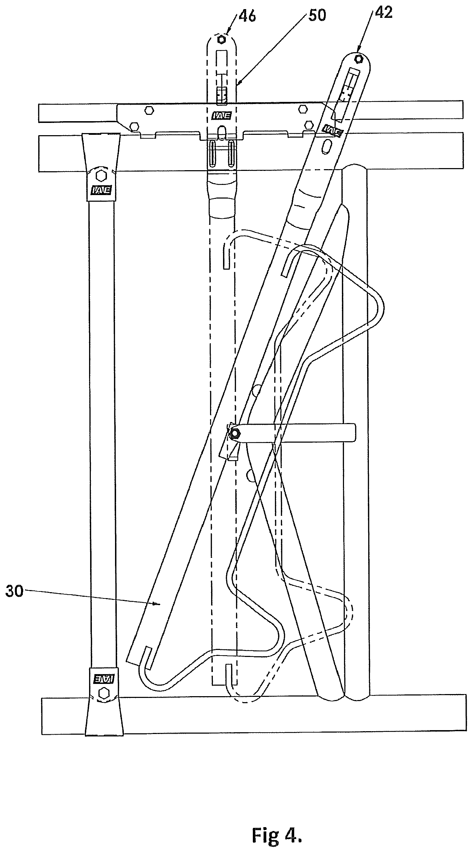

Fig. 4 shows the locking arrangement 50 in a locked condition with the rest condition 42 shown. Also shown in dotted lines is the locked condition 46. If a cow collapses when the arrangement 10 is in a locked condition 46, a farmer can manually disengage the locking arrangement 50 to allow the arrangement 10 to move to the release condition 48.

The arrangement 10 is urged to the rest condition 42 for instance by a profiled block of rubber provided at the mounting of the restraining member 30. As this does not form part of the present invention such an arrangement will not be described further.

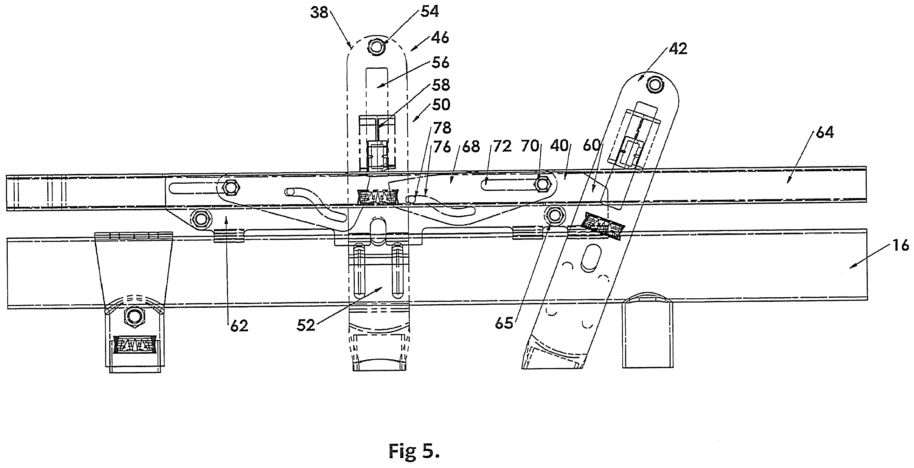

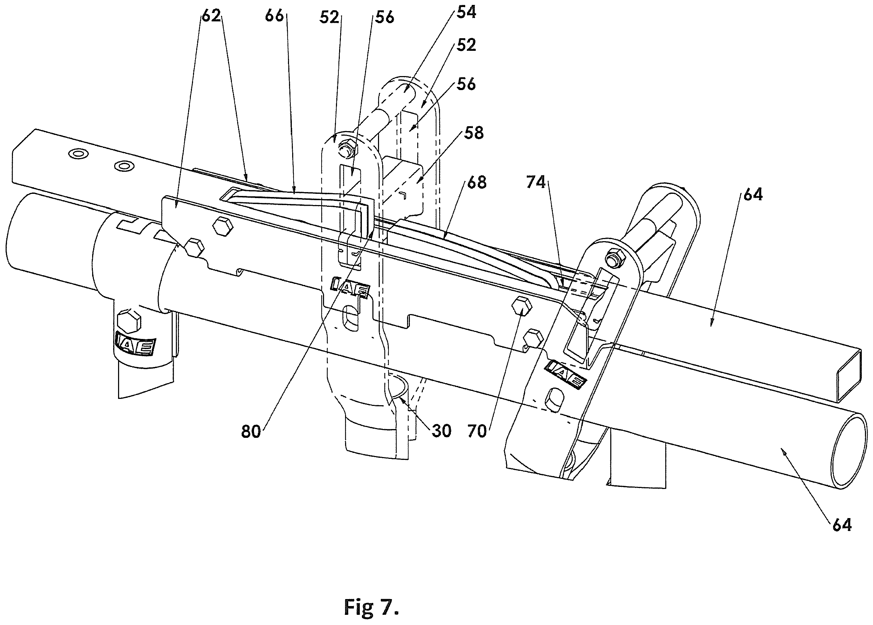

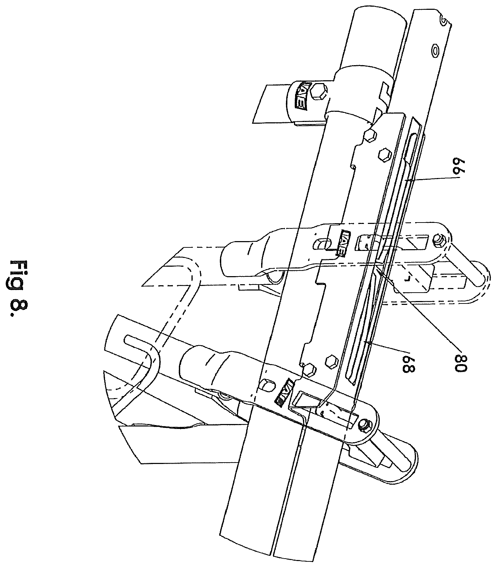

Figs. 5 - 8 show the locking arrangement 50 in greater detail with the first part 38 and the second part 40. The first part 38 comprises a pair of brackets 52 which extend upwardly and outwardly from the upper end of the restraining member 30. A bar 54 extends between the brackets 52 adjacent their upper end to retain upper parts of the brackets 52 in a parallel alignment. Aligned slots 56 are provided in each of the brackets 52 and a profiled polymer finger member 58 extends therebetween and is freely slidably movable along the slots 56. The finger member 58 will obviously drop to the lower end of the slots 56 under gravity if free to.

The second part 40 comprises a mounting bracket 60 mounted centrally on the top bar 16. The bracket 60 provides a spaced pair of plates 62 extending vertically. The operating member 64 is provided in the form of a length of square section tube extending between the plates 62 and movable relative thereto. It is to be realised that the operating member 64 will extend along the line of yoke arrangements 10 in the yoke feed panel.

A pair of latch members 66, 68 are respectively pivotally mounted towards one end thereof between the plates 62 towards respective ends thereof by pins 70. The latch members 66, 68 may be made of polymer to reduce noise. The pins 70 are extendible through respective slots 72 in side walls of the operating member 64. A pair of rollers 65 are provided extending between the plates 62, one towards each end thereof, which rollers 65 movingly support the operating member 64. A slot 74 is provided in the upper face of the operating member 64 to enable the latch member 66 to extend therethrough.

Tracks in the form of profiled slots 76 are provided on the sides of the latch members 66, 68 towards their distal ends. The slots 76 are curved, with the slot 76 in the left most latch member 66 as shown being curved to a greater degree. Projections 78 on the inside of the side walls of the operating member 64 engage respectively one in each of the slots 76.

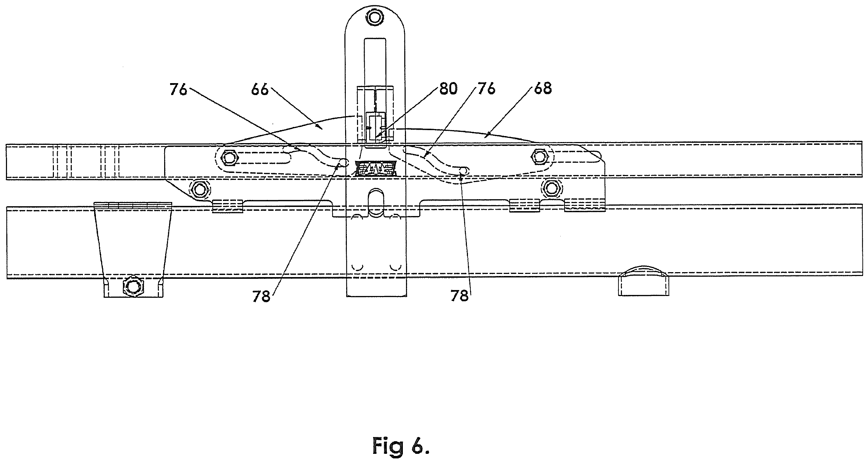

The latch members 66, 68 are movable between an unlocked condition as shown for instance in Fig. 5, and a locked condition as shown in Fig. 6. In the locked condition shown in Fig. 6 the latch members 66, 68 pivot upwardly defining ramps, with a gap 80 between the latch members 66, 68, which gap 80 is of a size to be able to receive the pin 58.

As can be seen for instance in Fig. 6, by virtue of the end positions of the profiled slots 76 and the geometry of the latch members 66, 68, in the locked condition the left most latch member 66 extends for a greater height than the other latch member 68.

The profiled slots 76, in both latch members 66, and 68, are deliberately designed such that they are longer than they need to be in a horizontal aspect to provide the vertical lift required by the latch members 66, 68. The slots 76 are also designed such that at each end thereof, and at each end of the movement of the pins 78 that moves within them, be it in lifting or lowering of the latch members 66, 68, there is a horizontal section of the slot 76 profile.

A proportion of each of these horizontal sections of the slots 76 is theoretically not required in the lifting/lowering sequence. This manifests itself in there being two potential periods of horizontal movement of the member 64 where there is no vertical movement of the latch members 66 and 68. The intention is that this allowance for excess horizontal movement in the member 64 is used as a tolerance which can accommodate any discrepancy in the frequency of the instances of the locking mechanism 50 along a panel 200, or the frequency of multiple panels 200 linked together.

In use when the locking arrangement 50 is in an unlocked condition the restraining member 30 is free to pivot relative to the remainder of the frame 12. The pin member 58 will rest on top of the operating member 64, and can move upwardly in the slots 56 as the restraining member 30 moves away from a vertical alignment in either direction.

To move the locking arrangement 50 to a locked condition the operating member 64 is slid to the right as shown in the drawings. By virtue of engagement of the projection 78in the profiled slots 76, the distal ends of the latch members 66, 68 will rise up, with the left hand latch member 66 rising to a greater degree as shown in Fig. 6.

If the finger member 58 slides across the right hand latch member 68 as for instance when the restraining member 30 is pivoted by a feeding cow away from the rest condition 42, the restraining member 30 will keep pivoting until the finger member 58 passes over the distal end of the latch member 66 whereupon it will fall into the gap 80 to restrain the restraining member 30 in the locked position.

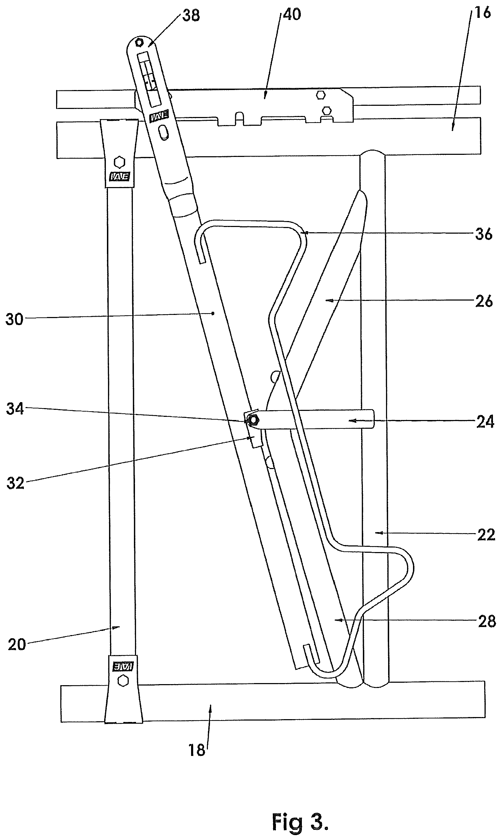

If a sufficient force is applied for instance by a fallen cow urging the restraining member 30 anti-clockwise as shown, when the locking arrangement 50 is in an unlocked condition the restraining member 30 will move to the release position as shown for instance in Fig. 3. If the locking arrangement 50 is in a locked condition this can be manually unlocked for instance by a farmer, by manually sliding the pin member 58 upwardly out of engagement with the latch members 66, 68. A handle (not shown) may be provided on the pin member 58 to facilitate manual movement thereof.

If the restraining member 30 is moving from the release position 48 towards the rest position 42, due to the greater height of the latch member 66 in the locked condition, the finger member 58 will generally jump over the gap 80. Therefore the arrangement will only be moved to a lock arrangement from the rest position. To release the yoke arrangements 10 the mounting bracket 60 can be moved back to the left as shown in the drawings.

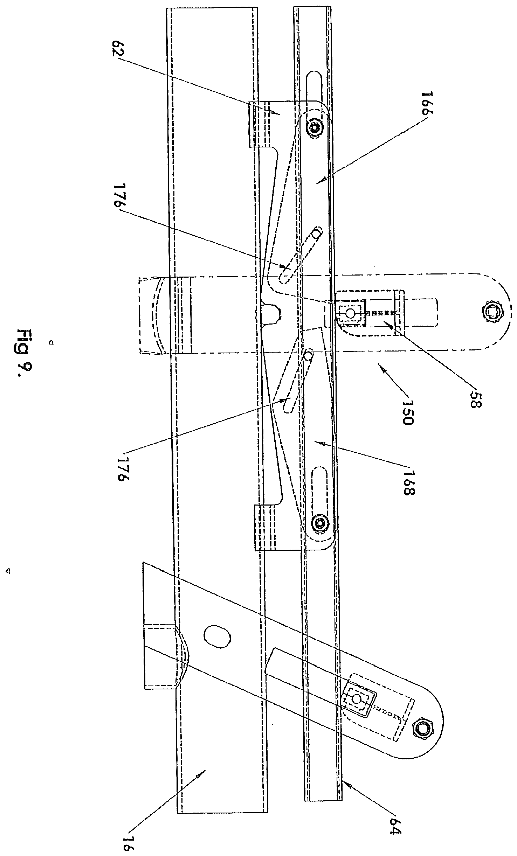

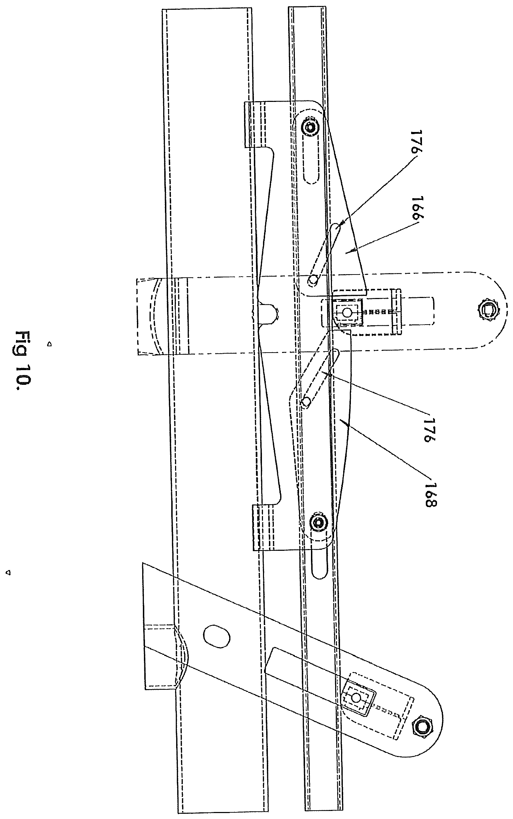

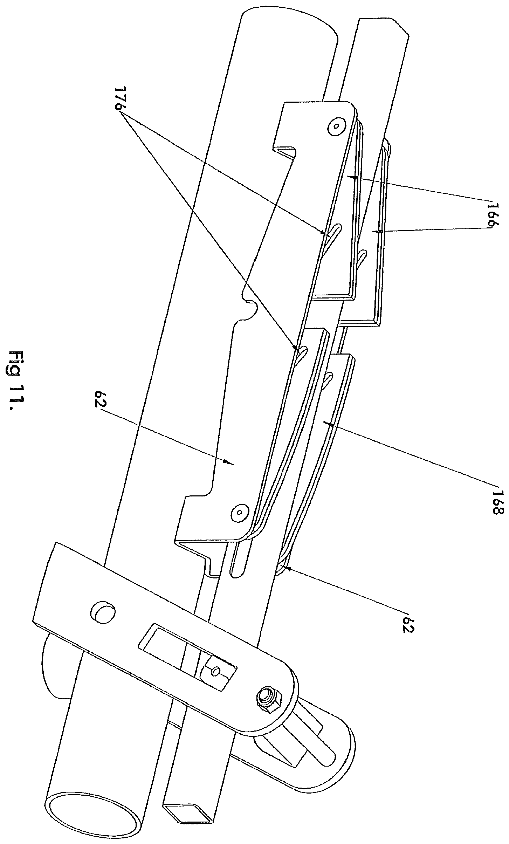

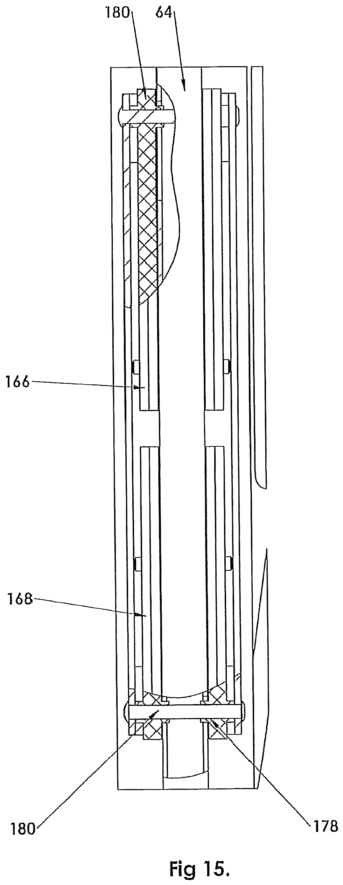

Figs. 9 - 15 show a second yoke arrangement with a different locking arrangement 150. In most instances the arrangement 150 is similar to the arrangement 50 except as indicated below. Rather than being profiled members, the latch members 166, 168 are provided as a pair of polymer plates located respectively on either side of the operating member 64, between the operating member 64 and the plates 62.

In this instance the slots 176 in the latch members 166, 168 are straight, but with the slot 176 in the left hand latch members 66 inclined at a greater angle to the horizontal than in the latch numbers 168.

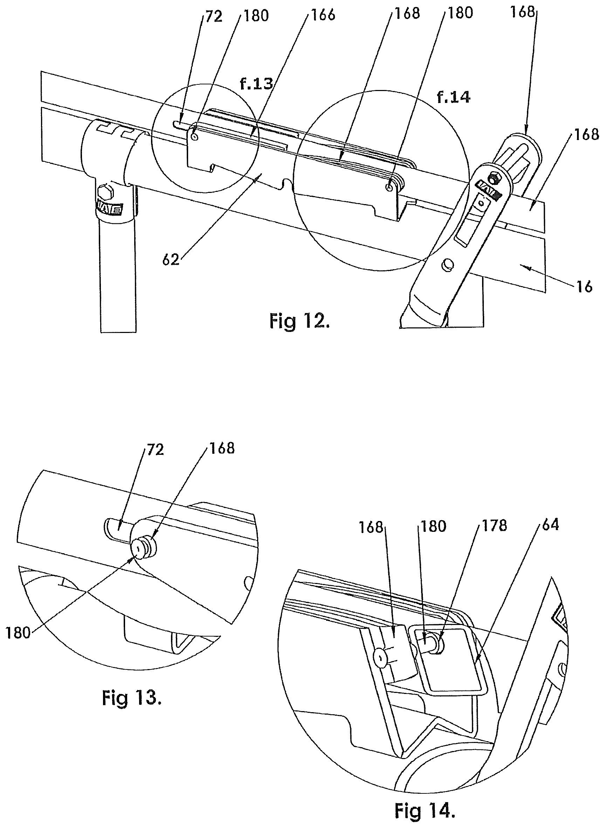

Figs 12 - 15 show the mounting of the latch members 166, 168 in more detail. Cylindrical shoulders 178 are provided on each of the latch members 166, 168, which shoulders 178 extend through the respective slots 72 and the operating member 64. Mounting pins 180 extend through the shoulders 178 to permit pivotal movement of the latch members 166, 168. The shoulders 178 slidably support the operating member 64. This arrangement means that the polymer plates 166, 168 locate between the operating member 64 and the plate 62, thereby avoiding metal to metal contact. This therefore avoids potential wear and also noise during operation.

The above described examples have been found to provide reliable operation which can be readily used by a farmer or otherwise.

It is to be realised that various other modifications may be made without departing from the scope of the invention. For instance the frame of the yoke arrangement and/or the restraining member may take a different form. The first part of a locking arrangement and the restraining member may take a different form. Components of different profiles and/or different materials could be used. The pivotal mounting of the latch members may, perhaps using bearings, slidably support the operating member.

## Claims

1. A yoke feed panel, the panel comprising a plurality of yoke arrangements (10), with each yoke arrangement (10) defining an opening through which an animal can extend their head and neck, each yoke arrangement (10) comprising a frame (12) defining an at least generally vertically aligned open space (14) with an elongate restraining member (30) pivotally mounted to the frame (12) to extend across the space (14) substantially from the top to the bottom thereof at a required inclination, a locking arrangement (50) being provided which includes an engagement part (38) provided on an upper end of the elongate restraining member (30) and a locking part (40) selectively movable between an unlocked (42) condition and a locked condition (46), the engagement part (38) being engageable with the locking part (40) when the locking part (40) is in the locked condition (46), the locking part (40) including two latch arrangements (66, 68) which in the unlocked condition (42) are located clear of the engagement part (38), and in a locked condition (46) define two upwardly extending ramps facing each other substantially in the plane of the open space defined by the frame (12), with a gap (80) between the summits of each ramp, in which gap (80) the engagement part (38) can selectively locate to retain the yoke arrangement (10) in a locked position (46), the latch arrangements (10) being movable substantially vertically between the locked (42) and unlocked (46) conditions, an elongate operating member (64) being provided movable longitudinally relative to the feeding yoke panel to move the locking parts (40) of each yoke arrangement (10) between the locked 46 and unlocked (42) conditions, the latch arrangements (66, 68) being pivotally mounted to the yoke arrangement frame (12) so as to be movable between a lowered position in the unlocked condition (42), and an upwardly extending inclined position in the locked condition (46), **characterised in that** projections (78) on the operating member (64) are engageable with tracks (76) on the latch arrangements (66, 68) to move the latch (66, 68) arrangement between the lowered and inclined positions as the operating member (64) moves.

2. A yoke feed panel according to claim 1, in which the latch arrangements (66, 68) are configured such that when in a locked condition (46) with the engagement part (38) moving from one side of the yoke arrangement (10) to another, such as when moving from a release position (48), the engagement part (38) will pass over the gap (80) without entering thereinto, whilst when moving from an opposite side for instance from a rest position (42), the engagement part will drop into the gap (80), one of the latch arrangements (66) being higher than the other (68) in the locked condition (46) to provide for passing of the engagement part (38) over the gap (80) when moving from a release position (48).

3. A yoke feed panel according to any of the preceding claims, in which the operating member (64) is slidably supported by support members (62) on the latch arrangement (66, 68).

4. A yoke feed panel according to any of the preceding claims, in which a handle (206) is provided on the operating member 64, to facilitate movement thereof between the locked (46) and unlocked (42) conditions.

5. A yoke feed panel according to any of the preceding claims, in which operating members (64) on adjacent colinear panels are operatively interconnectable such that the movement of one operating member (64) moves the locking parts (40) on all of the adjacent panels.

6. A yoke feed panel according to any of the preceding claims, in which retaining means are provided for selectively retaining the operating member (64) in a required one of the locked (46) and unlocked (42) conditions, and the retaining means may include one or more sprung pins selectively engageable in a respective hole or holes in the operating member (64).

7. A yoke feed panel according to any of the preceding claims, in which a bracket arrangement (60) is provided on an upper part of the yoke arrangement (10), which bracket arrangement (60) pivotally mounts the latch arrangements (66, 68).

8. A yoke feed panel according to claim 7, in which the operating member (64) extends through the bracket arrangement (60) and slots (72) may be provided in the operating member (64) to receive pivotal mountings (70) on the latch arrangements (66, 68).

9. A yoke feed panel according to any of the preceding claims, in which projections on sides of the operating member engage with tracks on the latch arrangements, which tracks (76) may be in the form of slots, and the tracks (76) may be longer than the required amount of movement of the projections (78), to provide for discrepancies between respective yoke arrangements (10).

10. A yoke feed panel according to any of the preceding claims, in which the latch arrangements (66, 68) each comprise a profiled member which is extendible through an opening (74) in the operating member (64).

11. A yoke feed panel according to any of claims 1 to 10, in which each latch arrangement (66, 68) comprises a pair of profiled members, each locatable on a respective side of the operating member (64).

12. A yoke feed panel according to any of the preceding claims, in which the engagement part 38 comprises a finger member (58) slidably mountable in a track (56) to extend between a pair of spaced brackets (52) provided on the upper end of the elongate restraining member (30) to be moved along the track (56).

13. A yoke feed panel according to claims 12, in which the track (56) is at least generally aligned with the elongate restraining member (30), with the finger member (58) being urged by gravity to a lower end of the track (56) except when urged upwardly by the latch arrangements (66, 68).

14. A yoke feed panel according to claims 12 or 13, in which a handle is provided on the finger member (58) to permit manual movement thereof along the track (56).

15. A yoke feed panel according to any of claims, 12 to 14 in which the finger member (58) and/or latch arrangements (66, 68) are made of a polymer material.

## Patentansprüche

1. Bügel-Fressgitter, wobei das Gitter eine Vielzahl von Bügelanordnungen (10) aufweist, wobei jede Bügelanordnung (10) eine Öffnung definiert, durch die ein Tier seinen Kopf und Hals hindurch strecken kann, wobei jede Bügelanordnung (10) einen Rahmen (12) aufweist, der einen zumindest allgemein senkrecht ausgerichteten freien Raum (14) mit einem länglichen Sperrglied (30) definiert, das schwenkbar an dem Rahmen (12) befestigt ist, um sich im Wesentlichen von oben nach unten mit einer benötigten Neigung über den Raum (14) hinweg zu erstrecken, wobei eine Verriegelungsanordnung (50) bereitgestellt ist, die ein Eingriffsteil (38) beinhaltet, das an einem oberen Ende des länglichen Sperrglieds (30) bereitgestellt ist, und ein Verriegelungsteil (40), das wahlweise zwischen einem nicht-verriegelten (42) Zustand und einem verriegelten (46) Zustand bewegbar ist, wobei das Eingriffsteil (38) mit dem Verriegelungsteil (40) in Eingriff gebracht werden kann, wenn sich das Verriegelungsteil (40) in dem verriegelten Zustand (46) befindet, wobei das Verriegelungsteil (40) zwei Rastanordnungen (66, 68) beinhaltet, die in dem nicht-verriegelten Zustand (42) so positioniert sind, dass sie frei von dem Eingriffsteil (38) sind, und in einem verriegelten Zustand (46) zwei sich nach oben erstreckende Rampen definieren, die einander im Wesentlichen in der Ebene des durch den Rahmen (12) definierten freien Raums zugewandt sind, mit einer Lücke (80) zwischen den höchsten Punkten jeder Rampe, in welche Lücke (80) das Eingriffsteil (38) wahlweise positioniert werden kann, um die Bügelanordnung (10) in einer verriegelten Position (46) zu halten, wobei die Rastanordnungen (10) im Wesentlichen vertikal zwischen dem verriegelten (42) und nicht-verriegelten Zustand (46) bewegbar sind, wobei ein längliches Betätigungsglied (64) relativ zu dem Bügel-Fressgitter längsseits bewegbar bereitgestellt ist, um die Verriegelungsteile (40) jeder Bügelanordnung (10) zwischen dem verriegelten (46) Zustand und dem nicht-verriegelten (42) Zustand zu bewegen, wobei die Rastanordnungen (66, 68) schwenkbar an dem Rahmen (12) der Bügel-Anordnung befestigt sind, um so zwischen einer abgesenkten Position in dem nichtverriegelten Zustand (42) und einer sich nach oben erstreckenden, geneigten Position in dem verriegelten Zustand (46) bewegbar zu sein, **dadurch gekennzeichnet, dass** Vorsprünge (78) an dem Betätigungsglied (64) mit Führungen (76) an den Rastanordnungen (66, 68) in Eingriff gebracht werden können, um die Rastanordnung (66, 68) zwischen den abgesenkten und geneigten Positionen zu bewegen, wenn sich das Betätigungsglied (64) bewegt.

2. Bügel-Fressgitter nach Anspruch 1, wobei die Rastanordnungen (66, 68) derart konfiguriert sind, dass, wenn sie sich in einem verriegelten Zustand (46) befinden, wobei sich das Eingriffsteil (38) von einer Seite der Bügelanordnung (10) zu einer anderen bewegt, beispielsweise beim Bewegen aus einer Freigabeposition (48), das Eingriffsteil (38) über die Lücke (80) gelangen wird, ohne in diese einzudringen, wohingegen das Eingriffsteil beim Bewegen von einer entgegengesetzten Seite, beispielsweise aus einer Ruheposition (42), in die Lücke (80) fallen wird, wobei eine der Rastanordnungen (66) in dem verriegelten Zustand (46) höher ist als die andere (68), um sicherzustellen, dass das Eingriffsteil (38) über die Lücke (80) gelangt, wenn es sich aus einer Freigabeposition (48) bewegt.

3. Bügel-Fressgitter nach einem der vorstehenden Ansprüche, wobei das Betätigungsglied (64) mittels Stützelementen (62) auf der Rastanordnung (66, 68) verschiebbar gestützt ist.

4. Bügel-Fressgitter nach einem der vorstehenden Ansprüche, wobei ein Griff (206) an dem Betätigungsglied (64) bereitgestellt ist, um dessen Bewegung zwischen dem verriegelten (46) und dem nicht-verriegelten (42) Zustand zu erleichtern.

5. Bügel-Fressgitter nach einem der vorstehenden Ansprüche, wobei Betätigungsglieder (64) an angrenzenden, kollinearen Gittern untereinander derart wirkverbindbar sind, dass die Bewegung eines Betätigungsglieds (64) die Verriegelungsteile (40) an allen angrenzenden Gittern bewegt.

6. Bügel-Fressgitter nach einem der vorstehenden Ansprüche, wobei Halteeinrichtungen zum wahlweisen Halten des Betätigungsglieds (64) in einem benötigten verriegelten (46) oder nicht-verriegelten (42) Zustand bereitgestellt sind, und die Halteeinrichtungen einen oder mehr Federstifte beinhalten können, die wahlweise in eine entsprechende Öffnung oder Öffnungen in dem Betätigungsglied (64) eingreifen können.

7. Bügel-Fressgitter nach einem der vorstehenden Ansprüche, wobei eine Halterungsanordnung (60) an einem oberen Teil der Bügelanordnung (10) bereitgestellt ist, welche Halterungsanordnung (60) die Rastanordnungen (66, 68) schwenkbar befestigt.

8. Bügel-Fressgitter nach Anspruch 7, wobei das Betätigungsglied (64) sich durch die Halterungsanordnung (60) hindurch erstreckt und Schlitze (72) in dem Betätigungsglied (64) bereitgestellt sein können, um Schwenkbefestigungen (70) an den Rastanordnungen (66, 68) aufzunehmen.

9. Bügel-Fressgitter nach einem der vorstehenden Ansprüche, wobei Vorsprünge an Seiten des Betätigungsglieds mit Führungen an den Rastanordnungen in Eingriff stehen, welche Führungen (76) in Form von Schlitzen vorliegen können, und die Führungen (76) länger sein können als der benötigte Betrag an Bewegung der Vorsprünge (78), um Diskrepanzen zwischen jeweiligen Bügelanordnungen (10) zu berücksichtigen.

10. Bügel-Fressgitter nach einem der vorstehenden Ansprüche, wobei die Rastanordnungen (66, 68) jeweils ein mit einem Profil versehenes Glied aufweisen, das durch eine Öffnung (74) in das Betätigungsglied (64) ausfahrbar ist.

11. Bügel-Fressgitter nach einem der Ansprüche 1 bis 10, wobei jede Rastanordnung (66, 68) ein Paar von mit Profilen versehenen Gliedern aufweist, von denen jedes auf einer jeweiligen Seite des Betätigungsglieds (64) angeordnet werden kann.

12. Bügel-Fressgitter nach einem der vorstehenden Ansprüche, wobei das Eingriffsteil (38) ein gleitend in einer Führung (56) anbringbares Fingerteil (58) aufweist, um sich zwischen einem Paar von beabstandeten Halterungen (52) zu erstrecken, die an dem oberen Ende des länglichen Sperrglieds (30) bereitgestellt sind, um entlang der Führung (56) bewegt zu werden.

13. Bügel-Fressgitter nach Anspruch 12, wobei die Führung (56) zumindest allgemein an dem länglichen Sperrglied (30) ausgerichtet ist, wobei das Fingerteil (58) durch Schwerkraft zu einem unteren Ende der Führung (56) gedrängt wird, außer wenn es durch die Rastanordnungen (66, 68) nach oben gedrängt wird.

14. Bügel-Fressgitter nach Anspruch 12 oder 13, wobei an dem Fingerteil (58) ein Griff bereitgestellt ist, um eine manuelle Bewegung desselben entlang der Führung (56) zu ermöglichen.

15. Bügel-Fressgitter nach einem der Ansprüche 12 bis 14, wobei das Fingerteil (58) und/oder die Rastanordnungen (66, 68) aus einem Polymer-Material gefertigt sind.

## Revendications

1. Panneau de cornadis, le panneau comprenant une pluralité de dispositifs de cornadis (10), chaque dispositif de cornadis (10) définissant une ouverture au travers de laquelle un animal peut étendre sa tête et son cou, chaque dispositif de cornadis (10) comprenant un cadre (12) définissant un espace ouvert au moins généralement aligné verticalement (14) avec un élément de retenue allongé (30) monté pivotant sur le cadre (12) pour s'étendre au travers de l'espace (14) sensiblement à partir du haut vers le bas de celui-ci selon une inclinaison requise, un dispositif de verrouillage (50) étant prévu, lequel comprend une partie d'engagement (38) prévue sur une extrémité supérieure de l'élément de retenue allongé (30) et une partie de verrouillage (40) pouvant être déplacée de manière sélective entre un état déverrouillé (42) et un état verrouillé (46), la partie d'engagement (38) pouvant être mise en prise avec la partie de verrouillage (40) lorsque la partie de verrouillage (40) est dans l'état verrouillé (46), la partie de verrouillage (40) comprenant deux dispositifs de loquet (66, 68) qui, dans l'état déverrouillé (42), sont situés à l'écart de la partie d'engagement (38), et dans un état verrouillé (46) définissent deux rampes s'étendant vers le haut qui se font face sensiblement dans le plan de l'espace ouvert défini par le cadre (12), avec une fente (80) entre les sommets de chaque rampe, fente (80) dans laquelle la partie d'engagement (38) peut se situer de manière sélective pour retenir le dispositif de cornadis (10) dans un état verrouillé (46), les dispositifs de loquet (10) étant mobiles sensiblement verticalement entre les états verrouillé (42) et déverrouillé (46), un élément d'actionnement de forme allongée (64) étant prévu mobile longitudinalement par rapport au panneau de cornadis pour déplacer les parties de verrouillage (40) de chaque dispositif de cornadis (10) entre les états verrouillé 46 et déverrouillé (42), les dispositifs de loquet (66, 68) étant montés de façon pivotante sur le cadre du dispositif de cornadis (12) de manière à être mobile entre une position abaissée dans l'état déverrouillé (42), et une position inclinée dirigée vers le haut à l'état verrouillé (46), **caractérisé en ce que** des saillies (78) sur l'élément d'actionnement (64) peuvent se mettre en prise avec des gorges (76) sur les dispositifs de loquet (66, 68) pour déplacer les dispositifs de loquet (66, 68) entre les positions abaissée et inclinée lorsque l'élément d'actionnement (64) se déplace.

2. Panneau de cornadis selon la revendication 1, dans lequel les dispositifs de loquet (66, 68) sont configurés de telle sorte que lorsqu'ils sont dans un état verrouillé (46) avec la partie d'engagement (38) se déplaçant depuis un côté du dispositif de cornadis (10) jusqu'à un autre, par exemple lors du déplacement depuis une position de libération (48), la partie d'engagement (38) passera au-dessus de la fente (80) sans entrer dans celle-ci, tandis que lors d'un déplacement depuis un côté opposé, par exemple, depuis une position de repos (42), la partie d'engagement va descendre dans la fente (80), l'un des dispositifs de loquet (66) étant plus haut que l'autre (68) dans l'état verrouillé (46) pour assurer le passage de la partie d'engagement (38) au-dessus de la fente (80) lors du déplacement depuis un état de libération (48).

3. Panneau de cornadis selon l'une quelconque des revendications précédentes, dans lequel l'élément d'actionnement (64) est supporté de manière coulissante par des éléments de support (62) sur le dispositif de loquet (66, 68).

4. Panneau de cornadis selon l'une quelconque des revendications précédentes, dans lequel une poignée (206) est prévue sur l'élément d'actionnement 64, afin de faciliter le déplacement de ce dernier entre les états verrouillé (46) et déverrouillé (42).

5. Panneau de cornadis selon l'une quelconque des revendications précédentes, dans lequel des éléments d'actionnement (64) sur les panneaux colinéaires adjacents sont interconnectables de manière fonctionnelle de telle sorte que le déplacement d'un élément d'actionnement (64) déplace les parties de verrouillage (40) sur l'ensemble des panneaux adjacents.

6. Panneau de cornadis selon l'une quelconque des revendications précédentes, dans lequel des moyens de retenue sont prévus pour retenir de manière sélective l'élément d'actionnement (64) dans un des états verrouillé (46) et déverrouillé (42) requis, et les moyens de retenue peuvent comprendre une ou plusieurs broches à ressort pouvant être engagée(s) de manière sélective dans un trou ou des trous respectifs dans l'élément d'actionnement (64).

7. Panneau de cornadis selon l'une quelconque des revendications précédentes, dans lequel un dispositif de support (60) est prévu sur une partie supérieure du dispositif de cornadis (10), lequel dispositif de support (60) monte de manière pivotante les dispositifs de loquet (66, 68).

8. Panneau de cornadis selon la revendication 7, dans lequel l'élément d'actionnement (64) s'étend au travers du dispositif de support (60) et des fentes (72) peuvent être prévues dans l'élément d'actionnement (64) pour recevoir des montages pivotants (70) sur les dispositifs de loquet (66, 68).

9. Panneau de cornadis selon l'une quelconque des revendications précédentes, dans lequel des saillies sur les côtés de l'élément d'actionnement se mettent en prise avec les gorges sur les dispositifs de loquet, lesquelles gorges (76) peuvent être réalisées sous la forme de fentes, et les gorges (76) peuvent être plus longues que la valeur requise de déplacement des saillies (78), pour prévoir des écarts entre les dispositifs de cornadis (10) respectifs.

10. Panneau de cornadis selon l'une quelconque des revendications précédentes, dans lequel les dispositifs de loquet (66, 68) comprennent chacun un élément profilé qui est extensible au travers d'une ouverture (74) dans l'élément d'actionnement (64).

11. Panneau de cornadis selon l'une quelconque des revendications 1 à 10, dans lequel chaque dispositif de loquet (66, 68) comprend une paire d'éléments profilés, chacun pouvant être placée sur un côté respectif de l'élément d'actionnement (64).

12. Panneau de cornadis selon l'une quelconque des revendications précédentes, dans lequel la partie d'engagement 38 comprend un élément de doigt (58) pouvant être monté de manière coulissante dans une gorge (56) pour s'étendre entre une paire de supports espacés (52) prévus sur l'extrémité supérieure de l'élément de retenue allongé (30) destiné à être déplacé le long de la gorge (56).

13. Panneau de cornadis selon la revendication 12, dans lequel la gorge (56) est au moins généralement alignée avec l'élément de retenue allongé (30), avec l'élément de doigt (58) qui est entraîné par gravité vers une extrémité inférieure de la gorge (56) sauf lorsqu'il est entrainé vers le haut par les dispositifs de loquet (66, 68).

14. Panneau de cornadis selon les revendications 12 ou 13, dans lequel une poignée est prévue sur l'élément de doigt (58) pour permettre le déplacement manuel de celui-ci le long du rail (56).

15. Panneau de cornadis selon l'une quelconque des revendications 12 à 14, dans lequel
l'élément de doigt (58) et / ou les dispositifs de loquet (66, 68) sont réalisés dans un matériau polymère.
